# EUROPEAN PATENT APPLICATION

(11) **EP 1 672 638 A1**
(43) Date of publication of application: **21.06.2006**
(21) Application number: 05110627.6
(22) Date of filing: 11.11.2005
(51) Int. Cl.: G11B 27/00, H04N 5/00

(54) **Signal output apparatus and signal output method**

(30) Priority: 15.12.2004 JP 2004363389
(71) Applicant: KABUSHIKI KAISHA TOSHIBA, Tokyo 105-8001 (JP)
(72) Inventor: Sera, Satoshi, c/o Toshiba Corporation, Minato-ku, Tokyo 105-8001 (JP); Nomura, Katsuyuki, c/o Toshiba Corporation, Minato-ku, Tokyo 105-8001 (JP)
(74) Representative: Henkel, Feiler & Hänzel

(57) **Abstract**

A signal output apparatus is provided comprising an input unit (13 to 15) configured to receive a main data and a notice of the presence of any further information related to the main data, a notifying unit (25) configured to notify the presence of the related information in response to the notice received from the input unit (13 to 15), an acquiring unit (21, 22) configured to acquire the related information in response to the notice received from the input unit (13 to 15), and an output unit (17) configured to multiplex and output the related information acquired by the acquiring unit (21, 22) with the main data received by the input unit (13 to 15).

## Description

The present invention relates to a signal output apparatus and a signal output method for multiplexing signals generated from, e.g., video and audio data and outputting their composite signal.

As is well known, a personal computer (PC) or the like is designed for simultaneously displaying on its display a data stored in its built-in storage medium and a data received from the outside over a network.

It is however true that each conventional PC enables merely to display different data separately on the display without integrating their contents while failing to exhibit all the data in a synchronized, multiplexed form.

Disclosed in Jpn. Pat. Appln. KOKAI Publication No. 11-161664 is an attempt for, when a desired Web page is accessed by an operator clicking the Web mark on the display screen, providing a link to a corresponding server on the Internet and displaying the Web page while temporarily canceling the playback of a title data. When the display of the Web page has been finished, the playback of the title data is returned.

The present invention has been developed in view of the above aspects and when the inputted composite signal is outputted as a multiplexing signal, its object is to provide a signal output apparatus and a signal output method for providing the convenience of a user for multiplexing different signals of interest.

According to one aspect of the present invention, there is provided a signal output apparatus comprising: an input unit configured to receive a main data and a notice of the presence of any further information related to the main data; a notifying unit configured to notify the presence of the related information in response to the notice received from the input unit; an acquiring unit configured to acquire the related information in response to the notice received from the input unit; and an output unit configured to multiplex and output the related information acquired by the acquiring unit with the main data received by the input unit.

According to another aspect of the present invention, there is provided a signal output method comprising: an input step of receiving a main data and a notice of the presence of any further information related to the main data; a notifying step of notifying the presence of the related information in response to the notice received at the input step; an acquiring step of acquiring the related information in response to the notice received at the input step; and an output step of multiplexing and outputting the related information acquired at the acquiring step with the main data received at the input step.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of an optical disk playback apparatus showing one embodiment of the present invention;
FIG. 2 is a flowchart showing some steps of the multiplexing action of the optical disk playback apparatus of the embodiment;
FIG. 3 is a flowchart showing the remaining steps of the multiplexing action of the optical disk playback apparatus of the embodiment;
FIG. 4 is a diagram illustrating an example of the screen display generated by the multiplexing action of the optical disk playback apparatus of the embodiment;
FIG. 5 is a diagram illustrating another example of the screen display generated by the multiplexing action of the optical disk playback apparatus of the embodiment; and
FIG. 6 is a diagram illustrating a further example of the screen display generated by the multiplexing action of the optical disk playback apparatus of the embodiment.

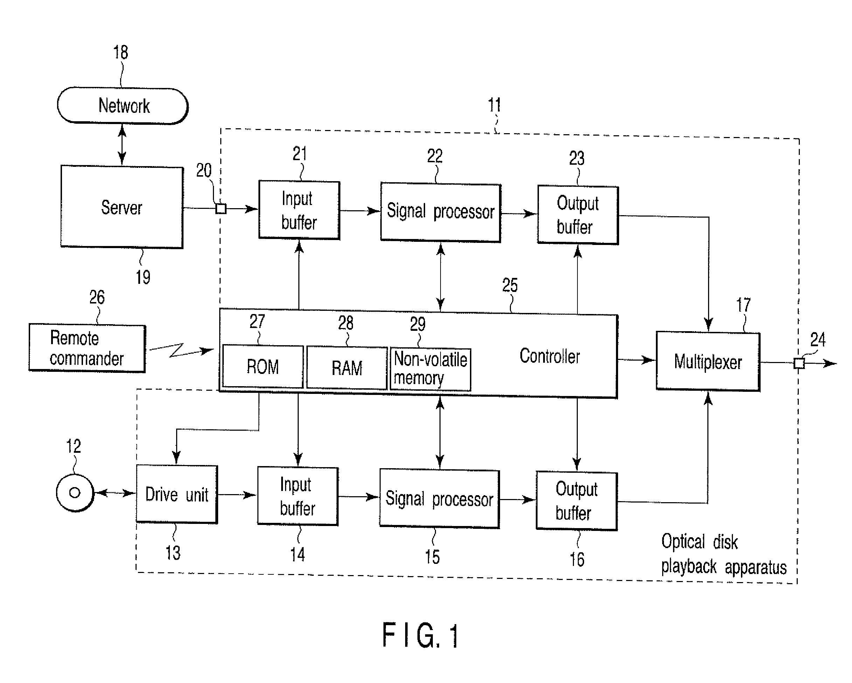

One embodiment of the present invention will be described in detail referring to the relevant drawings. FIG. 1 is a block diagram of an optical disk playback apparatus 11 incorporating the embodiment. The optical disk playback apparatus 11 is configured to direct a drive unit 13 to read signals of audio and video data from an optical disk 12 such as a digital versatile disk (DVD). The signals read by the drive unit 13 are then transferred via an input buffer 14 to a signal processor 15.

The signal processor 15 subjects the signals to the given playback processes including error compensation and decoding where they are converted to digital playback signals of the audio and video data. The playback signals processed by the signal processor 15 are transferred via an output buffer 16 to a multiplexer 17.

Meanwhile, the optical disk playback apparatus 11 is capable of, in response to a data saved in the optical disk 12, demanding external signals of audio and video data via a server 19 from a data supplier connected to an external network 18. The external signals received via the server 19 are then transferred via an input port 20 and an input buffer 21 to a signal processor 22.

The signal processor 22 subjects the external signals to give playback processes including identification, error compensation, and decoding where they are converted to digital playback signals of the audio and video data. The playback signals processed by the signal processor 22 are transferred via an output buffer 23 to the multiplexer 17.

The multiplexer 17 multiplexes the signals received from both the output buffers 16 and 23 to develop a composite signal, which is then outputted through an output port 24.

All the foregoing actions of the optical disk playback apparatus 11 are totally controlled by a controller 25. The controller 25 includes a central processing unit (CPU) and other components for, upon receiving a demand from a remote commander 26 as an entry device, controlling the relevant actions to achieve the result determined by the demand.

In particular, the controller 25 includes a read only memory (ROM) 27 for storage of control programs to be executed by the CPU, a random access memory (RAM) 28 for providing the CPU with a working area, and a non-volatile memory 29 for storage of setting and controlling data.

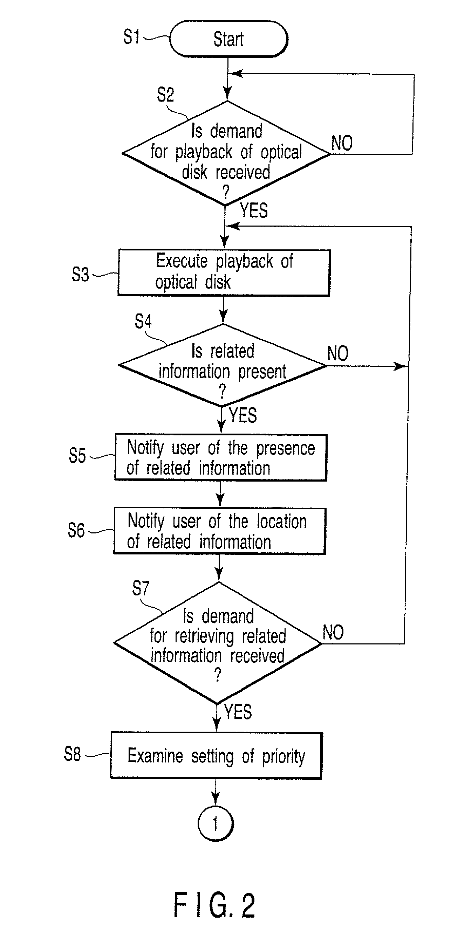

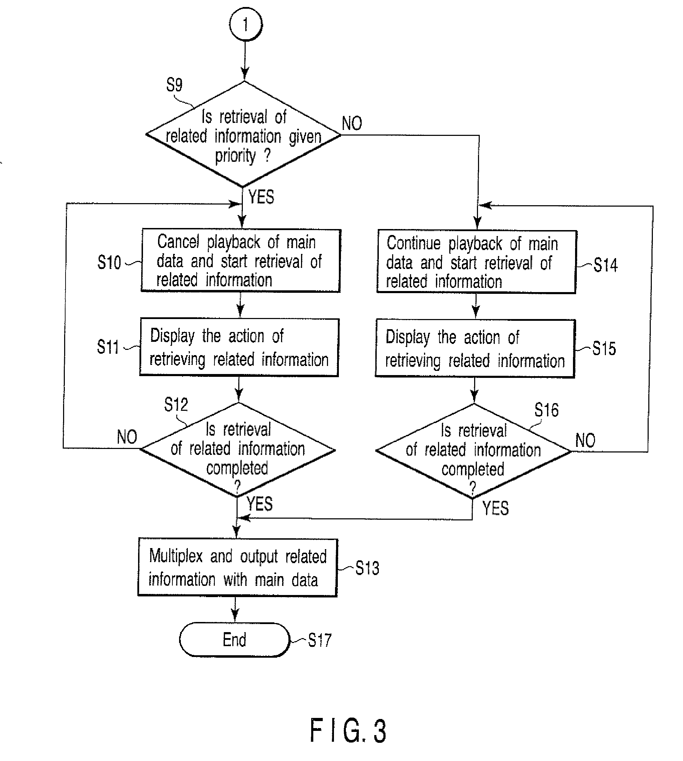

FIGS. 2 and 3 are flowcharts illustrating steps of the multiplexing action described above. As the action has started (step S1), the controller 25 examines in step S2 whether or not a demand for playback on the optical disk 12 is received from a user. When it is determined that the demand for playback is present (Yes), the action goes to step S3 for playing back the optical disk 12.

During the playback action on the optical disk 12, the controller 25 examines in step S4 whether or not a notice that any further information (an optional content) related to the main data being played back is saved in another external data supplying medium (for example, the external network 18) has been received from the optical disk 12.

When it is determined that no notice has been received (NO), the controller 25 repeats the action to step S3. When it is determined that the notice has been received (YES), the controller 25 notifies the user of the presence of the related information in step S5 and of the location of the target medium in which the related information is saved in step S6.

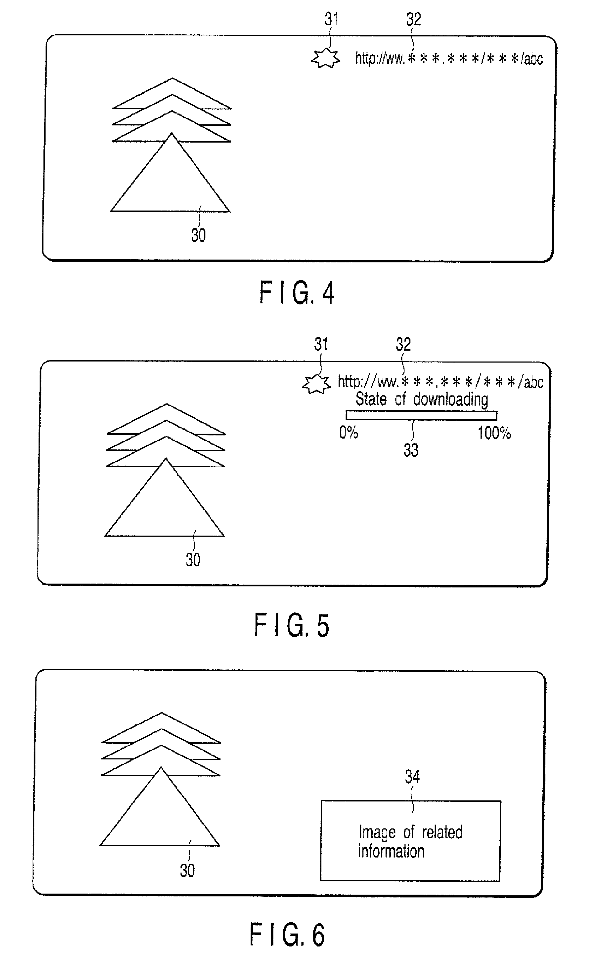

The notice may be given by the controller 25, as shown in FIG. 4, displaying on the display screen of the main image data 30 played back from the optical disk 12 simultaneously an icon 31 indicating the presence of the related information and an address of the target medium 32 on the network 18 for downloading the related information.

The controller 25 then examines in step S7 whether or not (the downloading of) the related information is demanded by the user. When it is determined not (NO), the action returns back to step S3.

When it is determined that the related information has been demanded by the user (YES), the action of the controller 25 advances to step S8 for examining the setting of priority. More particularly, the optical disk playback apparatus 11 permits the user to predetermine which is given priority when the notice of the presence of related information has been received during the playback action on the optical disk 12, the playback of the main data on the optical disk 12 or the downloading of the related information. The setting of priority is stored in the non-volatile memory 29.

For examining the setting of priority, the controller 25 determines in step S9 whether or not the downloading of the related information is given priority. When it is determined that the downloading of the related information is given priority (YES), the controller 25 cancels the playback of the main data on the optical disk 12 and commands the server 19 to retrieve the related information.

Upon the server 19 being commanded to retrieve the related information, the multiplexer 17 stops outputting the main image data 30 and the display screen displays a still image of the main image data 30 at the moment.

Further, the controller 25 displays the action of retrieving the related information in step S11. More specifically, the display of the action of retrieving the related information may be implemented, as shown in FIG. 5, by a visual indication 33 illustrating the downloading status of 0% to 100% of the related information together with the main data image 30 (still image) from the optical disk 12, the icon 31 indicating the presence of the related information, and the address 32 of the target medium where the related information is saved.

This is followed by the controller 25 examining in step S12 whether or not the downloading of the related information is completed. When it is determined that the downloading is not completed (NO), the action returns back to step S10. When it is determined that the downloading has been completed (YES), the controller 25 restarts the playback of the main data on the optical disk 12 in step S13 and after displaying the related information multiplexed with the main image data 30, terminates the multiplexing process (step S17).

At the time, the display screen displays, as shown in FIG. 6, the related information 34 overlapping the main image data 30 from the optical disk 12. When the playback of the main data on the optical disk 12 is restarted and the image data 30 multiplexed with its related information 34 are produced and outputted, the existing images including the icon 31, the location of the related information 32, and the downloading of the related information 33 are removed from the display screen.

On the other hand, when it is determined that the downloading is not given priority (NO), the controller 25 commands the server 19 to retrieve the related information while continuing the playback of the main data in step S14.

In step S15, the action of retrieving the related information is displayed on the display screen by the controller 25. The display of the action of retrieving the related information may be implemented, as shown in FIG. 5, by a visual indication 33 illustrating the downloading of 0% to 100% of the related information together with the main data from the optical disk 12, the icon 31 indicating the presence of the related information, and the address 32 of the target medium where the related information is saved.

This is followed by the controller 25 examining in step S16 whether or not the downloading of the related information is completed. When it is determined that the downloading is not completed (NO), the action returns back to step S14. When it is determined that the downloading has been completed (YES), the controller 25 displays the related information multiplexed with the main data read out from the optical disk 12 in step S13 before terminating the multiplexing action (step S17).

At the time, the display screen displays, as shown in FIG. 6, the related information 34 overlapping the main image data 30 from the optical disk 12. When the main image data 30 read out from the optical disk 12 and multiplexed with its related information 34 are produced and outputted, the existing images including the icon 31, the location of the related information 32, and the downloading of the related information 33 are removed from the display screen.

As set forth above, the embodiment of the present invention when receiving a notice of the presence of the related information during the playback of the main data on the optical disk 12 displays the icon 31 indicating the notice and the address of a target medium 32 where the related information is saved on the display screen. This allows each user to be informed of the presence of the related information while viewing the main data read out from the optical disk 12 and then start an action for retrieving the related information, thus giving the user a higher convenience in its operation.

Also, the embodiment favorably allows the user to predetermine the setting of priority for selecting between the downloading of the related information and the playback of the main data from an optical disk when the related information is present. Moreover, the action of downloading the related information is favorably displayed as a visual indication 33 on the display screen for convenience of the user.

Although the notice of the presence of the related information is informed with its icon 31 which can then be viewed by the user in the embodiment, it may be given also in the form of sounds. The related information is not limited to a visual image to be displayed on the display screen but may be an audio signal. The location of the target medium 32 where the related information is saved may also be displayed constantly regardless of the main data multiplexed with the related information being displayed on the display screen.

The main data may also be received from not only the optical disk 12 but also from any applicable recording medium or transfer medium. Similarly, the related information may be received from not only the network 18 but also from any applicable recording medium or transfer medium. In brief, the present invention is applicable to any system which is capable of, when receiving a notice of the presence of any further information related to the main data as well as a data of the location where the related information is saved, retrieving the related information from the location and then multiplexing the main data with the related information.

It would be understood that the present invention is not limited to the foregoing embodiment but its variations or modifications may be made in practice without departing from the scope of the present invention. Also, the present invention may cover any combination of the components disclosed in the above description. For example, one or more of the components assembled in the foregoing embodiment may be omitted if necessary. Moreover, a combination of the components of different embodiments may suitably be allowed.

## Claims

1. A signal output apparatus **characterized by** comprising:
an input unit (13 to 15) configured to receive a main data and a notice of the presence of any further information related to the main data;
a notifying unit (25) configured to notify the presence of the related information in response to the notice received from the input unit (13 to 15);
an acquiring unit (21, 22) configured to acquire the related information in response to the notice received from the input unit (13 to 15); and
an output unit (17) configured to multiplex and output the related information acquired by the acquiring unit (21, 22) with the main data received by the input unit (13 to 15).

2. A signal output apparatus according to claim 1, **characterized in that**
the notifying unit (25) is configured to notify a location from which the related information is acquired and which is contained in the notice.

3. A signal output apparatus according to claim 1, **characterized in that**
the notifying unit (25) is configured to notify the action of the acquiring unit (21, 22) for acquiring the related information with time.

4. A signal output apparatus according to claim 1, **characterized in that**
the notifying unit (25) is configured to output from the output unit (17) the information to be notified.

5. A signal output apparatus according to claim 1, **characterized in that**
the acquiring unit (21, 22) is configured to acquire the related information from the location of the related information contained in the notice.

6. A signal output apparatus according to claim 1, **characterized in that**
the output unit (17) is configured to predetermine the setting of priority for desirably selecting between the continuation of outputting the main data and the canceling of outputting the main data during the action of the acquiring unit (21, 22) for acquiring the related information.

7. A signal output method **characterized by** comprising:
an input step (13 to 15, S3) of receiving a main data and a notice of the presence of any further information related to the main data;
a notifying step (25, S5) of notifying the presence of the related information in response to the notice received at the input step (13 to 15, S3);
an acquiring step (21, 22, S10, S14) of acquiring the related information in response to the notice received at the input step (13 to 15, S3); and
an output step (17, S13) of multiplexing and outputting the related information acquired at the acquiring step (21, 22, S10, S14) with the main data received at the input step (13 to 15, S3).

8. A signal output method according to claim 7,
**characterized in that**
the output step (17, S13) is configured to predetermine the setting of priority for desirably selecting between a step (S14) of continuing the action of outputting the main data and a step (S10) of canceling the action of outputting the main data during the action of the acquiring step (21, 22, S10, S14) for acquiring the related information.
